# EUROPEAN PATENT APPLICATION

(11) **EP 3 115 178 A1**
(43) Date of publication of application: **11.01.2017**
(21) Application number: 15176145.9
(22) Date of filing: 09.07.2015
(51) Int. Cl.: B29C 49/24

(54) **METHOD OF FORMING COLORS ON SURFACES OF PLASTIC PRODUCTS**

(71) Applicant: Liu, Ming-Fan, Taichung City (TW)
(72) Inventor: Liu, Ming-Fan, Taichung City (TW)
(74) Representative: Peters, Sebastian Martinus

(57) **Abstract**

A method of forming colors on surfaces of plastic products has a preparing step, a covering step, and a blow molding step. The preparing step includes preparing a melting plastic material (10), at least one covering film (40, 40', 40"), and at least two molds (50, 60). The covering step includes conveying the covering film (40, 40', 40") between the material (10) and the molds (50, 60) and covering the covering film (40, 40', 40") around the melting plastic material (10). The blow molding step includes mounting the molds (50, 60) around the covering film (40, 40', 40"), blowing the melting plastic material (10) to attach the covering film (40, 40', 40") on the molds (50, 60), moving the molds (50, 60) away after cooling the melting plastic material (10) to integrally form a color plastic product (A).

## Description

### 1. Field of the Invention

The present invention relates to a method of forming colors on surfaces of plastic products, and more particularly to a method that can form colors on surfaces of plastic products with lower cost and can provide a preferred quality of colors.

### 2. Description of the Prior Arts

Due to the characteristics of light weight, acid and alkali resistance, rust-proof, waterproof, and insulation, plastic products can be seen everywhere in the daily life and cannot be replaced by other materials. The plastic products can be manufactured by injecting, extruding or hollow molding, etc. With the purposes and functions of the plastic increasingly diverse, the customer's demand of the graphics and texture of the surfaces of the plastic products has been continuously raised. Then, the plastic products can be beautified by electroplating, painting or printing, etc. to enhance the product texture and value of the plastic products. However, the graphics or colors that are formed by the above-mentioned secondary processing may be scratched, fade away or disappear after a long time of use, and this will affect the appearance and texture of the plastic products.

In view of the above problems, in recent years the plastic industry has developed a new plastic injection molding technology "In-Mold Decoration (IMD)," which combines "Printing Technology" and "Injection Molding Technology". In the conventional IMD, words or graphics are printed or transferred on a plastic film firstly, and the plastic film is fed into a mold after an injection molding process to form with a melting plastic material to form a plastic product, or the plastic film is directly formed in the mold and is formed with the melting plastic material to form the plastic product. Then, the plastic film is formed on a surface of the plastic product in the mold, and the surface of the plastic product can present exquisite beauty of color and texture to enhance the added value of products.

However, in the conventional IMD, the mold is blown before the melting plastic material is moved into the mold, and then the melting plastic material is blown in the mold to form the plastic product. The plastic film with words or graphics may deform when the melting plastic material is blown in the mold and cannot be formed on the surface of the plastic product at the correct position, and this will affect the appearance and texture of the plastic products.

To overcome the shortcomings, the present invention provides a method of manufacturing a hollow surface mount type electronic component to mitigate or obviate the aforementioned problems.

The main objective of the present invention is to provide a method of forming colors on surfaces of plastic products, and more particularly to a method that can form colors on surfaces of plastic products with lower cost and can provide a preferred quality of colors.

The method of manufacturing a hollow surface mount type electronic component in accordance with the present invention comprises a preparing step, a covering step, and a blow molding step. The preparing step includes preparing a melting plastic material, at least one covering film, and at least two molds. The melting plastic material is extruded between the al least two molds. The covering step includes conveying the at least one covering film between the melting plastic material and one of the at least two molds and spacing the at least one covering film away from mold cavities of the at least two molds, and covering the at least one covering film around an external surface of the melting plastic material. The blow molding step includes moving the at least two molds closer to each other to be mounted around the at least one covering film and the melting plastic material, blowing the melting plastic material to expand to attach the at least one covering film on inner surfaces of the mold cavities of the at least two molds, and moving the at least two molds away from each other after cooling the melting plastic material into a specific fixed shape in the mold cavities to integrally form a hollow and color plastic product.

Other objectives, advantages and novel features of the invention will become more apparent from the following detailed description when taken in conjunction with the accompanying drawings.

### IN THE DRAWINGS:

Fig. 1 is a block diagram of a method of forming colors on surfaces of plastic products in accordance with the present invention;
Fig. 2A is an operational side view of an extruding step of a first embodiment of the method in Fig. 1;
Fig. 2B is an enlarged side view of the extruding step of the method in Fig. 2A;
Fig. 3 is a cross sectional top view of the extruding step of the method along line 3-3 in Fig. 2A;
Fig. 4 is an operational top view of a covering step of the method in Fig. 1;
Fig. 5 is an operational side view of a blow molding step of the method in Fig. 1;
Fig. 6 is an operational cross sectional top view of a blow molding step of the method along line 6-6 in Fig. 5;
Fig. 7 is a perspective view of a second embodiment of a method of forming colors on surfaces of plastic products in accordance with the present invention;
Fig. 8A is an operational side view of an extruding step of the method in Fig. 7;
Fig. 8B is an enlarged side view of the extruding step of the method in Fig. 8A;
Fig. 9 is an operational side view of a blow molding step of the method in Fig. 7;
Fig. 10A is an enlarged side view of a third embodiment of a method of forming colors on surfaces of plastic products in accordance with the present invention; and
Fig. 10B is an enlarged side view of a fourth embodiment of a method of forming colors on surfaces of plastic products in accordance with the present invention.

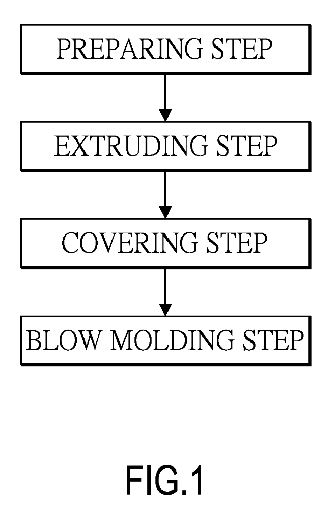

With reference to Fig. 1, a first embodiment of a method of forming colors on surfaces of plastic products in accordance with the present invention comprises a preparing step, an extruding step, a covering step, and a blow molding step.

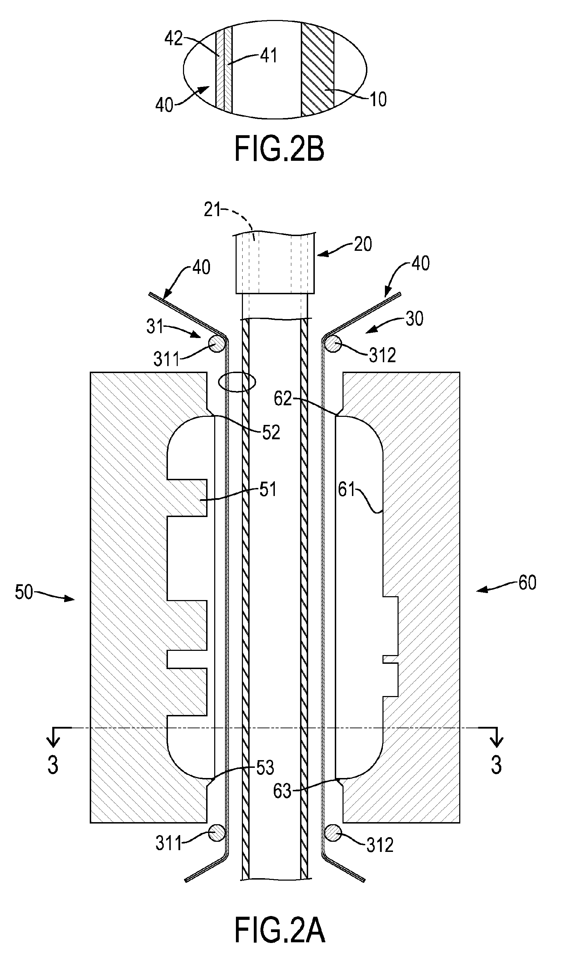

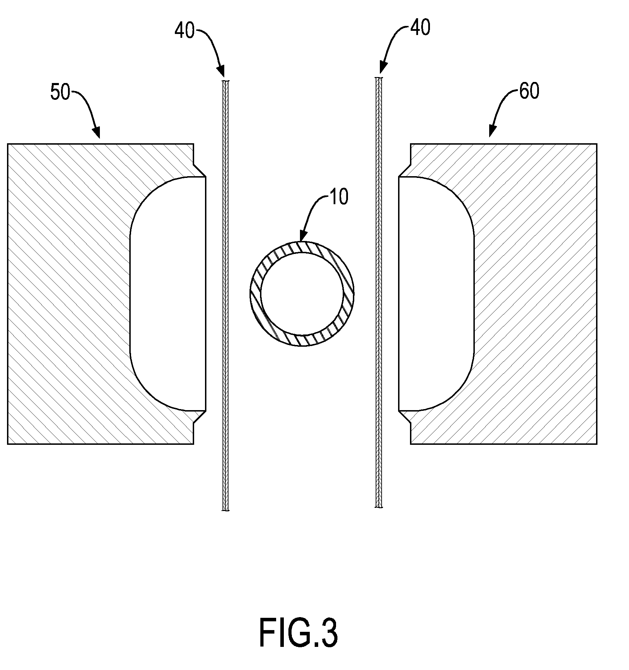

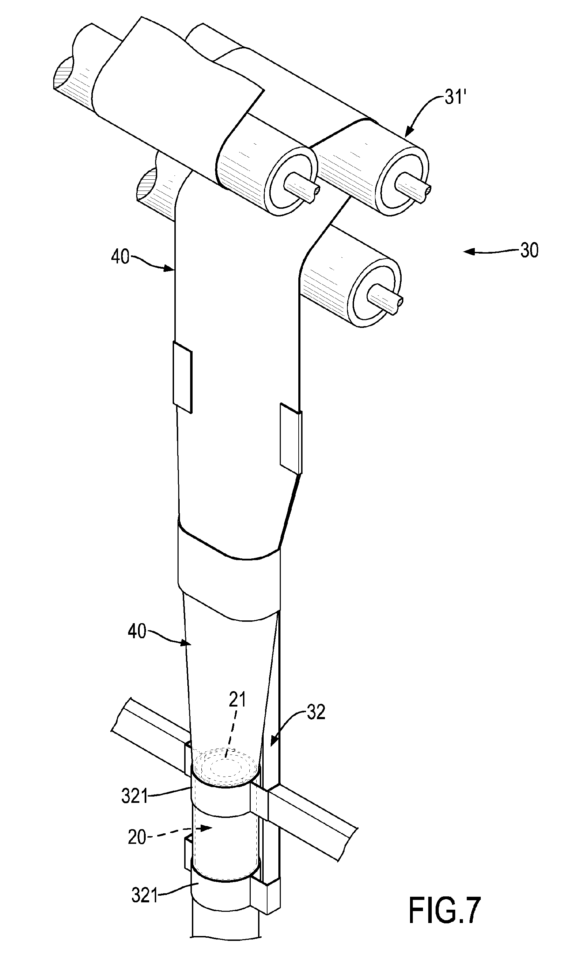

With further reference to Figs. 2A, 2B, and 3, the preparing step comprises preparing a melting plastic material 10, a discharge head 20, a film conveying unit 30, two covering films 40, and a mold set. The discharge head 20 is a discharge end of a hollow molding machine and has a blowing device 21. The blowing device 21 is mounted in the discharge head 20 as shown in Fig. 7. The melting plastic material 10 is fed into the hollow molding machine and is extruded out of the hollow molding machine via the discharge head 20.

The film conveying unit 30 is mounted below the discharge head 20 and has a roller set 31. The roller set 31 is intermittently rotated below the discharge head 20 and has two first rollers 311 and two second rollers 312. The two first rollers 311 are spaced apart at a longitudinal interval and mounted below the discharge head 20. The second rollers 312 are spaced apart at a longitudinal interval, are mounted below the discharge head 20, and respectively align with the first rollers 311. Then, the discharge head 20 is mounted above the roller set 31 between the rollers 311, 312.

The two covering films 40 are respectively and movably mounted on the rollers 311, 312 of the roller set 31 to enable the covering films 40 to face each other at an interval. Each one of the covering films 40 has an inner side, an outer side, a film layer 41, and a color layer 42. The film layer 41 is formed on the inner side of the covering film 40 and faces the film layer 41 of the other covering film 40. The color layer 42 is formed on the outer side of the covering film 40 and abuts the first rollers 311 or the second rollers 312. Preferably, the film layer 41 is made of materials with high temperature resistance and high ductility such as Polypropylene (PP) or Polyethylene (PE), and the color film 42 is made of materials with high temperature resistance and can be printed on the film layer 41 by spray painting, electroplating or printing.

The mold set is mounted around the two covering films 40 below the discharge head 20 and has at least two molds 50, 60, which are respectively a first mold 50 and a second mold 60. The first mold 50 is uprightly mounted below the discharge head 20 between the first rollers 311, and the second mold 60 is mounted below the discharge head 20 between the second rollers 312. The molds 50, 60 are moved closer to each other or away from each other, and each one of the molds 50, 60 has an inner side, a top, a bottom, a mold cavity 51, 61, a top truncated edge 52, 62, and a bottom truncated edge 53, 63. The inner sides of the molds 50, 60 face to each other. The mold cavities 51, 61 are respectively formed in the inner sides of the molds 50, 60 and communicate with each other. The top truncated edges 52, 62 are respectively formed on and protrude from the inner sides of the molds 50, 60 near the tops of the molds 50, 60 and selectively contact each other. The bottom truncated edges 53, 63 are respectively formed on and protrude from the inner sides of the molds 50, 60 near the bottoms of the molds 50, 60 and selectively contact each other.

With reference to Figs. 2A, 2B, and 3, the extruding step comprises extruding the melting plastic material 10 between the molds 50, 60 via the discharge head 20 to form an upright hollow cylindrical shape between the two covering films 40. Preferably, in the extruding step, the melting plastic material 10 is extruded out of the discharge head in a high temperature state (about 200 °C).

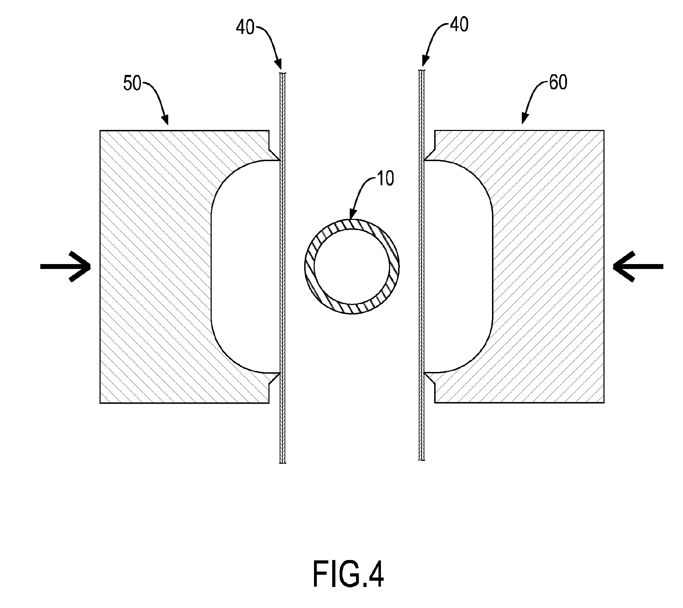

With reference to Fig. 4, the covering step comprises moving the molds 50, 60 closer to each other to respectively push the two covering films 40, attaching the film layers 41 of the two covering films 40 closely on an external surface of the upright hollow cylindrical shaped melting plastic material 10 by the high temperature state of the melting plastic material 10, cutting the melting plastic material 10 and the two covering films 40 by the truncated edges 52, 53, 62, 63 of the molds 50, 60 to cut off the melting plastic material 10 and the two covering films 40 in the mold cavities 51, 61 of the molds 50, 60.

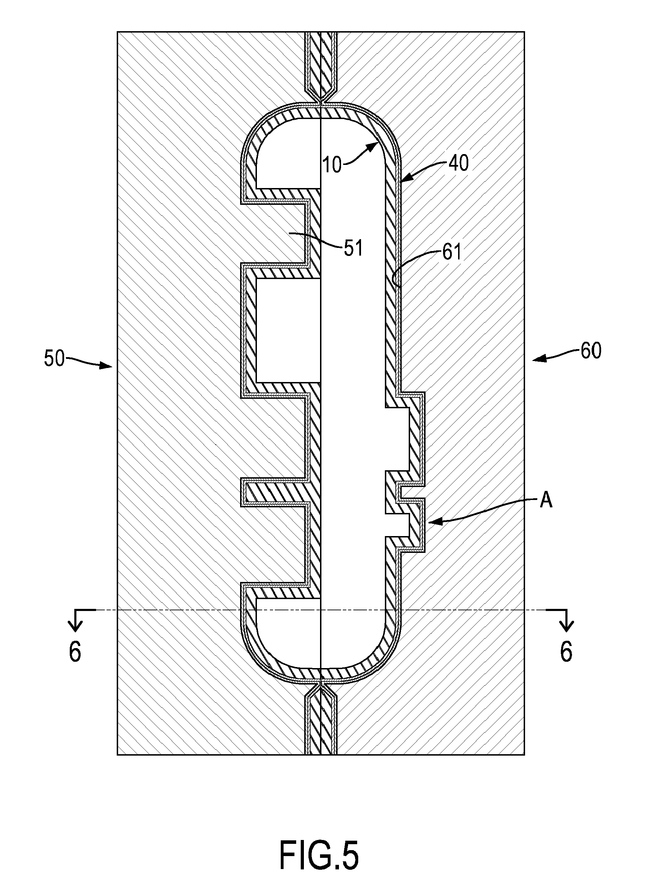

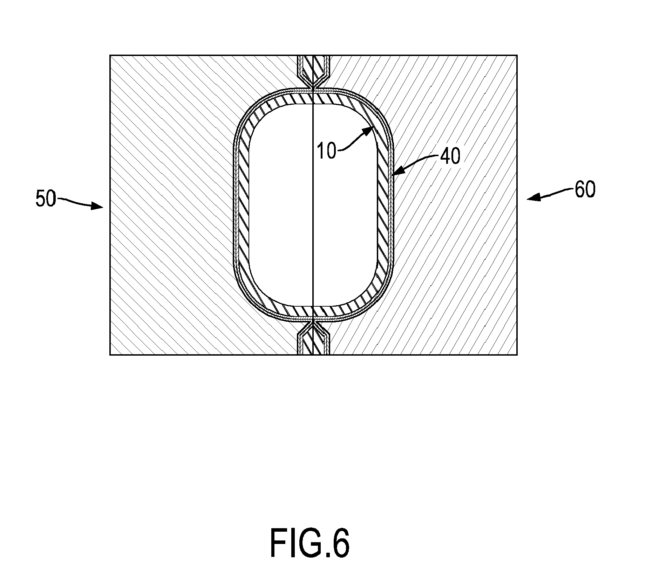

With reference to Figs. 5 and 6, the blow molding step comprises blowing the melting plastic material 10 by the blowing device 21 of the discharge head 20 when the melting plastic material 10 moves out of the discharge head 20 and moves between the molds 50, 60, attaching the color layers 42 of the two covering films 40 respectively on two inner surfaces of the mold cavities 51, 61 by the blowing device 21 to expand the melting plastic material 10, moving the molds 50, 60 away from each other after cooling the melting plastic material 10 into a specific fixed shape in the mold cavities 51, 61 to integrally form a hollow and color plastic product A.

In the first embodiment of a method of forming colors on surfaces of plastic products, the two covering films 40 are pushed toward the melting plastic material 10 respectively by the molds 50, 60 to enable the two covering films 40 to attach on the external surface of the upright hollow cylindrical shaped melting plastic material 10 when the melting plastic material moves out of the discharge head 20. Then, the film layers 41 of the two covering films 40 are closely attached on the external surface of the upright hollow cylindrical shaped melting plastic material 10, and this can enable the color layers 42 of the two covering films 40 to be securely mounted on the upright hollow cylindrical shaped melting plastic material 10 and can prevent the color layers 42 shedding from the plastic product A.

In addition, the melting plastic material 10 and the two covering films 40 are respectively moved by the discharge head 20 and the film conveying unit 30 and are directly moved into the molds 50, 60, and this can enable the two covering films 40 to align with the upright hollow cylindrical shaped melting plastic material 10 by the intermittently rotations of the roller set 31. Furthermore, when a user wants to change the surface color of the plastic product A, the user only needs to replace the covering films 40 of different colors. Consequently, the method of forming colors on surfaces of plastic products in accordance with the present invention can integrally form colors on the surface of the plastic product A without utilizing an electroplating process, a painting process or a printing process, and this can reduce the cost of forming colors on the surface of the plastic product A and also can provide a preferred quality of colors to the plastic product A.

With reference to Fig. 7, a second embodiment of a method of forming colors on surfaces of plastic products in accordance with the present invention is substantially the same as the first embodiment except for the following features. In the preparing step, the film conveying unit 30 is connected to the discharge head 20 and has a roller set 31' and a track 32. The roller set 31' is mounted above the discharge head 20. The track 32 is mounted through the discharge head 20 below the roller set 31' and has at least one limiting segment 321. The at least one limiting segment 321 is mounted around the discharge head 20 and has a curved space. In addition, only one covering film 40 is prepared in the preparing step of the second embodiment.

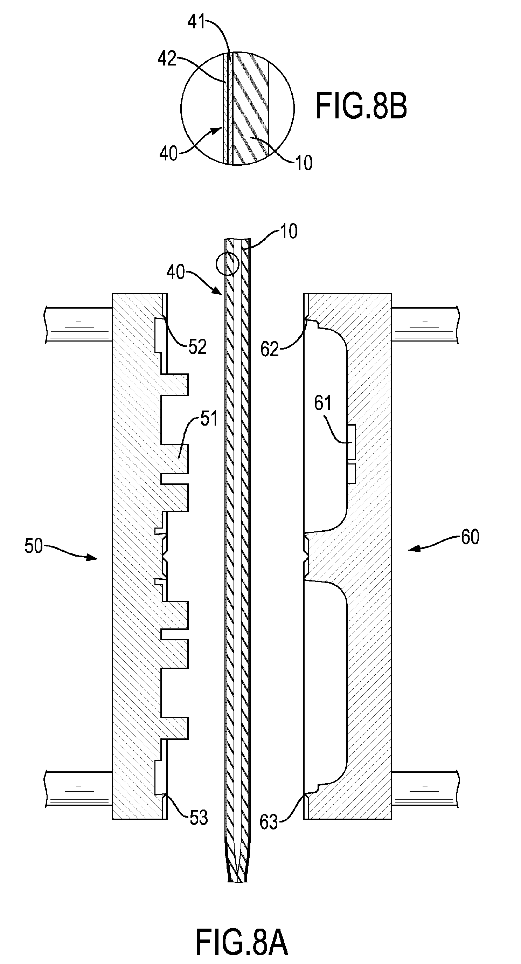

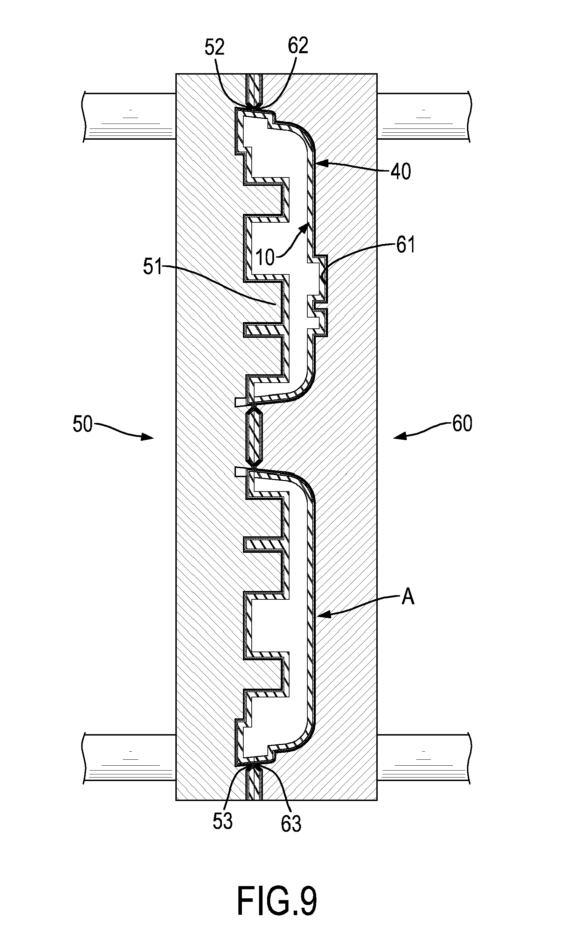

With reference to Figs. 7, 8A, and 8B, in the covering step, the covering film 40 is moved by the roller set 31' of the film conveying unit 30 to intermittently and downwardly move into the track 32, and the covering film 40 is curled into a circular shape. When the melting plastic material 10 is extruded out of the discharge head 20, the circular-shaped covering film 40 is moved with the melting plastic material 10. When the covering film 40 separates from the at least one limiting segment 321, the covering film 40 is mounted around the external surface of the upright hollow cylindrical shaped melting plastic material 10, and the upright hollow cylindrical shaped melting plastic material 10 and the covering film 40 are blown between the molds 50, 60 to form the hollow and color plastic product A as shown in Fig. 9.

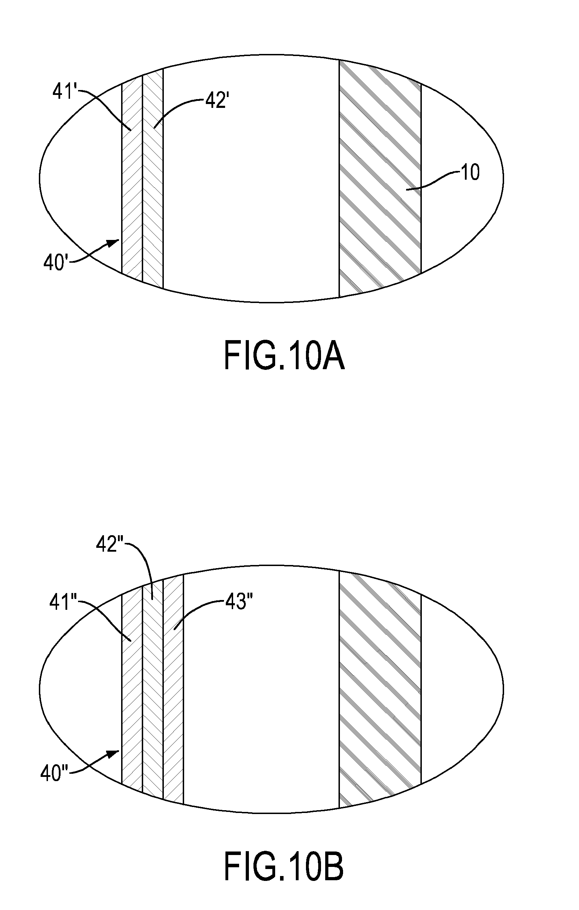

Additionally, with reference to Fig. 10A, a third embodiment of a method of forming colors on surfaces of plastic products in accordance with the present invention is substantially the same as the first embodiment except for the following features. In the preparing step, the film layer 41' is formed on the outer side of the covering film 40' and the color layer 42' is formed on the inner side of the covering film 40'. Then, in the covering step, the color layers 42' are attached on the external surface of the upright hollow cylindrical shaped melting plastic material 10 and the film layers 41' are located outside of the color layers 42', and this can prevent the color layers 42' from shedding off.

Furthermore, with reference to Fig. 10B, a fourth embodiment of a method of forming colors on surfaces of plastic products in accordance with the present invention is substantially the same as the first embodiment except for the following features. In the preparing step, each covering film 40" has a first film layer 41", a color layer 42", and a second film layer 43". The color layer 42" is mounted between the first film layer 41" and the second film layer 43", the second film layers 43" are attached on the external surface of the upright hollow cylindrical shaped melting plastic material 10, and the first film layers 41" are located outside of the color layers 42".

The method of forming colors on surfaces of plastic products as described has the following advantages.
1. In the present invention, the molds are moved closer to each other to push the at least one covering film 40, 40', 40" to attach on the external surface of the melting plastic material 10. Then, the melting plastic material 10 and the at least one covering film 40, 40', 40" are clamped by the molds 50, 60 at the same time to directly and integrally form a hollow and color plastic product A. In addition, the at least one covering film 40, 40', 40" can align with the melting plastic material 10 by the intermittent rotations of the roller set 31, 31' of the film conveying unit 30 without utilizing an electroplating process, a painting process or a printing process, and this can reduce the cost of forming colors on the surface of the plastic product A and also can provide a preferred quality of colors to the plastic product A.
2. The film layer 41, 41', 41", 43" of the at least one covering film 40, 40', 40" is attached on the external surface of the melting plastic material 10, and is made of material with high temperature resistance and high ductility to enable the color layer 42, 42', 42" of the at least one covering film 40 to be securely mounted around the melting plastic material 10. Then, the color layer 42, 42', 42" of the at least one covering film 40 will not be scratched, fade away or disappear after a long time of use, and this can provide a preferred quality of colors to the plastic products A.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A method of forming colors on surfaces of plastic products, **characterized in that** the method comprises:
a preparing step comprising
preparing a melting plastic material (10), at least one covering film (40, 40', 40"), and at least two molds (50, 60); and
extruding the melting plastic material (10) between the at least two molds (50, 60);
a covering step comprising
conveying the at least one covering film (40, 40', 40") between the melting plastic material (10) and one of the at least two molds (50, 60) and spacing the at least one covering film (40, 40', 40") away from mold cavities (51, 61) of the at least two molds (50, 60); and
covering the at least one covering film (40, 40', 40") around an external surface of the melting plastic material (10); and
a blow molding step comprising
moving the at least two molds (50, 60) closer to each other to be mounted around the at least one covering film (40, 40' ,40") and the melting plastic material (10);
blowing the melting plastic material (10) to expand to attach the at least one covering film (40, 40', 40") on inner surfaces of the mold cavities (51, 61) of the at least two molds (50, 60); and
moving the at least two molds (50, 60) away from each other after cooling the melting plastic material (10) into a specific fixed shape in the mold cavities (51, 61) to integrally form a hollow and color plastic product (A).

2. The method as claimed in claim 1, wherein in the covering step, the at least one covering film (40, 40', 40") is conveyed between the melting plastic material (10) and one of the at least two molds (50, 60) by a film conveying unit (30) with intermittent rotations.

3. The method as claimed in claim 2, wherein in the preparing step, the at least one covering film (40, 40', 40") is made of materials with high temperature resistance and high ductility.

4. The method as claimed in claim 3, wherein
in the covering step, the film conveying unit (30) has a roller set (31, 31') and the at least one covering film (40, 40', 40") is mounted on the roller set (31, 31') to move between the melting plastic material (10) and one of the at least two molds (50, 60); and
in the blow molding step, the at least two molds (50, 60) move closer to each other to push the at least one covering film (40, 40', 40") to attach on the external surface of the melting plastic material (10).

5. The method as claimed in claim 4, wherein in the covering step, the film conveying unit (30) has a track (32) mounted around the at least one covering film (40, 40', 40") below the roller set (31, 31'), the track (32) has at least one limiting segment (321) abutting the at least one covering film (40, 40', 40") to curl the at least one covering film (40, 40', 40"), and the at least one covering film (40, 40', 40") is mounted around the melting plastic material (10) after moving out of the at least one limiting segment (321) of the track (32).

6. The method as claimed in any one of claims 1 to 5,
wherein
in the preparing step, the at least one covering film (40) has an inner side, an outer side, a film layer (41) formed on the inner side of the at least one covering film (40), and a color layer (42) formed on the outer side of the at least one covering film (40); and
in the covering step, the film layer (41) is attached on the external surface of the melting plastic material (10).

7. The method as claimed in any one of claims 1 to 5,
wherein
in the preparing step, the at least one covering film (40') has an inner side, an outer side, a film layer (41') formed on the outer side of the at least one covering film (40'), and a color layer (42') formed on the inner side of the at least one covering film (40'); and
in the covering step, the color layer (42') is attached on the external surface of the melting plastic material (10).

8. The method as claimed in any one of claims 1 to 5,
wherein
in the preparing step, the at least one covering film (40") has a first film layer (41"), a second film layer (43"), and a color layer (42") formed between the first film layer (41") and the second film layer (43") of the at least one covering film (40'); and
in the covering step, the second film layer (43") is attached on the external surface of the melting plastic material (10).
